# EUROPEAN PATENT SPECIFICATION

(11) **EP 1 986 200 B1**
(45) Date of publication and mention of the grant of the patent: **25.08.2010**
(21) Application number: 07707374.0
(22) Date of filing: 25.01.2007
(51) Int. Cl.: H01F 1/26, H01F 41/16

(54) **COMPOSITE MAGNETIC SHEET AND PROCESS FOR PRODUCING THE SAME**
ZUSAMMENGESETZTES MAGNETISCHES BLATT UND HERSTELLUNGSPROZESS DAFÜR
FEUILLE MAGNETIQUE COMPOSITE ET SON PROCEDE DE PRODUCTION

(30) Priority: 02.02.2006 JP 2006025433
(43) Date of publication of application: 29.10.2008
(73) Proprietor: Sumida Corporation, Tokyo 103-0074 (JP)
(72) Inventor: UCHIKIBA, Fumio, Chiyoda-ku Tokyo 102-0074 (JP); OTSUKA, Tsutomu, Chuo-ku, Tokyo 103-8589 (JP); KAWARAI, Mitsugu, Chuo-ku, Tokyo 103-8589 (JP)
(74) Representative: Schäfer, Matthias W.
(86) International application number: PCT/JP2007/051127
(87) International publication number: WO 2007/088762

(56) References cited:
- EP-A- 0 301 561
- EP-A- 0 959 480
- JP-A- 2000 243 615
- JP-A- 2002 289 414
- JP-A- 2004 247 663
- JP-A- 2004 247 663
- US-B1- 6 887 412

## Description

### TECHNICAL FIELD

The present invention relates to a composite magnetic sheet suitable for a magnetic substance of a coil, and a method of producing the composite magnetic sheet.

### BACKGROUND ART

In recent years, with the trend of reductions in the thickness and size of electrical and electronic equipment and a higher density mounting of electrical and electronic equipment, demands for reducing the size, height, and thickness of electronic components such as a coil component mounted in electrical and electronic equipment have rapidly increased. Moreover, the coil component used for a power supply circuit is required to have a higher performance concerning the electrical characteristics for dealing with a large applied current.

Conventionally, a magnetic member used for the coil component has been produced by the following method, for example. A binder and an acrylic dispersant are added to a ferrite magnetic powder, and the whole is pulverized and mixed by a ball mill, a beadmill, or the like for uniform dispersion, and then, the dispersion is subjected to calcination. The obtained calcined powder is pulverized for granulation, and then formed into a given shape by press forming (e.g., Patent Document 1).

Moreover, the following production method is also employed. A ferrite magnetic powder is kneaded with a resin, a solvent, etc., to produce a paste, and a plurality of magnetic green sheets each formed into a thin sheet having a thickness of 10 to 100 µm are laminated. The laminate of the magnetic green sheets is pressed with a pressing machine as a magnetic member for the coil component, and then integrally baked in a baking furnace. Thereafter, an exterior electrode is formed on the side end surface of a sintered body to produce a laminated chip coil (e.g., Patent Document 2).

Further, a method is also known, the method involving coating a metal magnetic powder with a resin or mixing a resin in the metal magnetic powder, and producing a metal dust core by high pressure press.
Patent Document 1: Japanese Patent Application Laid-Open No. 2005-097048 A (Paragraph No. 0043 and 0049, and Fig. 1)
Patent Document 2: Japanese Patent Application Laid-Open No. 6-333743 A (Paragraph No. 0010 and Fig. 1)
Patent Document 3: Japanese Patent Application Laid-Open No. 5-335130 A (Paragraph No. 0007)

The EP 0 959 480 A relates to a core material for a noise filter formed by powders of a flat and soft magnetic material which are dispersed and buried into an insulating material such as rubber or plastic and in which the aspect ratio of the powder is not less than 10.

The EP 0 301 561 A relates to a powder of a magnetically soft amorphous alloy comprising flakes having a major and a minor axis, wherein the average ratio of major to minor axis is in the range of 1.2 to 5 and which is suitable for forming magnetic shields.

The JP 2002289414 A relates to a composite magnetic material for attenuating noises of 100 to 400 MHz and to a method for manufacturing such a composite magnetic material. Thereby, a film of the composite magnetic material is formed by pressure-bonding soft magnetic metal powder coated with an insulating film such that the space factor between the soft magnetic metal powder to the composite material is 50% or above and such that the film has a thickness of 5 µm to 0.4 mm.

### DISCLOSURE OF THE INVENTION

### PROBLEMS TO BE SOLVED BY THE INVENTION

However, the above-described conventional production methods and the magnetic members produced by the production methods have the following problems. The ferrite sintered body disclosed in Patent Document 1 has an advantage that the ferrite sintered body can be stably produced at low cost. However, when the ferrite sintered body is reduced in the size and thickness, the strength of the ferrite sintered body remarkably decreases. Moreover, by reducing the volume or the cross sectional area, the magnetic properties of the ferrite sintered body also tend to decrease. Therefore, there is a problem that the ferrite sintered body lacks practicability as a low-height coil component.

Moreover, the magnetic green sheet disclosed in Patent Document 2 is suitable as a low-height laminated coil component, but is difficult to heighten the adaptability to a large applied current, i.e., magnetic properties concerning magnetic saturation. Thus, the magnetic green sheet disclosed in Patent Document 2 is mainly used as a signal circuit component such as a noise filter. Moreover, since the production process is complicated, there is also a problem that the production cost is high.

The metal dust core disclosed in Patent Document 3 can be improved in the magnetic properties, but has a problem that the strength decreases when the size and height are reduced. In particular, when press forming is employed, the magnetic powder is sharply deformed in the process, resulting in a possibility of reduced strength.

The present invention has been made so as to solve the above-described problems. The present invention aims to provide a composite magnetic sheet, which is excellent inmagnetic properties while increased strength is achieved even when the composite magnetic sheet is employed as a magnetic member such as a thin coil component, and a method of producing the composite magnetic sheet.

This object is achieved by a composite magnetic sheet having the features of claim 1 and a producing method thereof having the features of claim 4. Advantageous embodiments of the present invention are described in the dependent claims.

### MEANS FOR SOLVING THE PROBLEMS

To attain the above-mentioned object, according to the present invention, there is provided a composite magnetic sheet including at least a resin and a metal magnetic powder, in which the metal magnetic powder contains a flat powder having a major axis and a minor axis; a diameter of the major axis of the flat powder is in a range of not less than 5 µm and not more than 80 µm; an aspect ratio defined by a dimension ratio between the major axis and the minor axis of the flat powder is in a range of not less than 5 and not more than 20; and the metal magnetic powder is dispersed so that the major axis is aligned in parallel along a surface of the composite magnetic sheet.

In the case of a composite magnetic sheet having such a structure, the maximum saturation magnetic flux density (Bm) can be expected to be more favorable than that of the ferrite magnetic powder, and the permeability (µ) can be expected to be more favorable than that of the dust core. Moreover, since the metal magnetic powder is dispersed in a resin, sufficient strength can be held even when the height is reduced.

When the diameter of the major axis of the metal magnetic powder is adjusted to 5 µm or more, the metal magnetic powder having a flat shape can be easily formed. Therefore, the metal magnetic powder is easily oriented in one direction, and thus the magnetic properties of the composite magnetic sheet can be improved. When the diameter of the maj or axis of the metal magnetic powder is adjusted to 80 µm or shorter, the metal magnetic powder is easily formed. In particular, when a doctor blade method is employed, the metal magnetic powder easily passes through the blade at the time of coating.

When the aspect ratio of the metal magnetic powder is adjusted to 5 or higher, the metal magnetic powder is easily oriented in one direction in a resin. When the aspect ratio is adjusted to 20 or lower, a line is difficult to form in the sheet; the metal magnetic powders are difficult to form a bridge with each other in a resin; the metal magnetic powder is easily oriented in one direction; and a structure having a high filling factor is easily formed. More specifically, when the aspect ratio of the metal magnetic powder is adjusted to be in the range of not less than 5 and not more than 20, a composite magnetic sheet having high filling properties is easily realized, in which a line is difficult to form in the sheet, and the metal magnetic powder is further oriented in one direction. As a result, the strength and magnetic properties of the composite magnetic sheet are further improved.

According to another aspect of the present invention, there is provided a composite magnetic sheet having a thickness in the range of not less than 10 µm and not more than 250 µm.

According to another aspect of the present invention, there is provided a method of producing a composite magnetic sheet including at least a resin and a metal magnetic powder, the method including: mixing the metal magnetic powder, the resin, and an organic solvent to produce a slurry; the metal magnetic powder containing a flat powder having a major axis and a minor axis, the flat powder having a diameter of the major axis of the flat powder in the range of not less than 5 µm and not more than 80 µm, and having an aspect ratio defined by a dimension ratio between the major axis and the minor axis in the range of not less than 5 and not more than 20; applying the slurry onto a support to form a coating film; and drying the coating film.

By adopting such a production method, a composite magnetic sheet which has a high strength and is excellent in magnetic properties can be easily produced even when employed as a magnetic member such as a thin coil component. After the slurry is applied to a support, the flat metal magnetic powder spontaneously precipitates in the slurry with the major axis direction down, and lands to the support to be oriented substantially in parallel to the surface of the composite magnetic sheet. Thus, as compared with a method of applying a magnetic field to forcibly orient the metal magnetic powder, the sheet is hard to deform. Therefore, the composite magnetic sheet is hard to produce cracking and the like. Moreover, since it is not necessary to use a magnetic field application device, the process can be simplified and the cost can be reduced. Further, according to the production method of the present invention, the viscosity of the slurry is adjusted in the case where a doctor blade is used, whereby the thickness of the composite magnetic sheet can be easily adjusted. Therefore, the production process can be simplified, and a thin composite magnetic sheet having a desired thickness can be efficiently produced at low cost.

According to another aspect of the present invention, there is provided a method of producing a composite magnetic sheet, in which the resin used for producing the slurry is an epoxy resin.

According to another aspect of the present invention, there is provided a method of producing a composite magnetic sheet, in which a thickness of the composite magnetic sheet after being dried is in the range of not less than 10 µm and not more than 250 µm.

Usable as the metal magnetic powder contained in the composite magnetic sheet of the present invention are, for example, iron-silicon, iron, aluminum, platinum, zinc, titanium, chromium, an amorphous alloy, an iron-aluminum-silicon alloy, an iron-nickel alloy, and an iron group nanocrystal. The above-mentioned metal magnetic powder is merely one example, and another metal magnetic powder may be employed. It should be noted that the metal magnetic powder may be one kind of powder or a mixture of two or more kinds of powder.

It is preferable to use an epoxy resin for a resin serving as a base material of the composite magnetic sheet of the present invention. When the epoxy resin is used, it is preferable to use, for example, a resin which contains a bisphenol A type polymer epoxy resin and a polyfunctional epoxy resin as main components, to which an epoxy resin having a particular skeleton is added, and in which a bisphenol A type novolak resin is used as a curing agent. In particular, it is preferable that the weight ratio of the bisphenol A type polymer epoxy resin to the polyfunctional epoxy resin be about 2:1. Moreover, the addition amount of the epoxy resin having a particular skeleton is 0.25 to 1, and more preferably 0.3 to 0.5 based on the above-mentioned main components. By adjusting the addition amount of the epoxy resin having a particular skeleton to the above-mentioned range, a composite magnetic sheet having a high Tg and a high strength can be obtained. The curing agent is preferably added in a proportion of 5 to 30% by weight based on the total amount of the above-mentioned main components, the epoxy resin having a particular skeleton, and the curing agent. Besides the bisphenol A type novolak resin, usable as the curing agent used for the present invention are, for example, a phenol novolac resin, polyamide resin, acid anhydride curing agents such as maleic anhydride and phthalic anhydride, latent amine curing agents such as dicyandiamide and imidazole, and aromatic amines such as diaminodiphenylmethane and diaminodiphenyl sulfone. These curing agents may be used singly or in combination of two or more thereof.

It should be noted that, as a main component of an epoxy resin, other kinds of resins such as a bisphenol AD type epoxy resin, bisphenol F type epoxy resin, bisphenol S type epoxy resin, naphthalene type epoxy resin, and biphenyl type epoxy resin may be used. It is preferable to employ an epoxy resin having formability, moisture resistance, heat resistance, adhesiveness, and insulation properties when the other kinds of resins are used. In particular, it is more preferable to employ an epoxy resin showing a high Tg and having a Tg in the range of from 90°C to 120°C.

As an organic solvent used in the production process for the composite magnetic sheet of the present invention, toluene, methyl butyl ketone, ethanol, xylene, methyl ethyl ketone, methyl isobutyl ketone, etc., and a combination of one or more of the above can be used, for example.

For a support used in the production method for the composite magnetic sheet of the present invention, it is preferable to use a film material which is tougher than the composite magnetic sheet and can give a moderate tension to the composite magnetic sheet. For example, it is more preferable to use polyethylene terephthalate (PET), polyethylene, polypropylene, polyimide, etc., for the support, and, of those, PET is particularly preferable. In addition, a mold release cloth or the like may be used for the support.

The "orientation" as used in the present invention refers to not only a state where the metal magnetic powder is completely parallel to the surface of the composite magnetic sheet but also a state where the proportion of the metal magnetic powder which is dispersed in the direction along the surface of the composite magnetic sheet is larger than the proportion of the metal magnetic powder which is dispersed in the thickness direction of the composite magnetic sheet. Therefore, a substance along the thickness direction of the composite magnetic sheet may exist in some of the metal magnetic powder.

### EFFECTS OF THE INVENTION

The present invention can provide a composite magnetic sheet excellent in magnetic properties while the improvement in formability and reduction in the thickness are achieved.

### BRIEF DESCRIPTION OF THE DRAWINGS

Fig. 1 is a schematic cross-sectional view of a composite magnetic sheet according to an embodiment of the present invention.
FIG. 2 is a schematic configuration diagram of a composite magnetic sheet production apparatus to be used in a part of a production process for a composite magnetic sheet according to an embodiment of the present invention.
FIG. 3 is a flowchart illustrating a production process for a composite magnetic sheet according to an embodiment of the present invention.
Fig. 4 is a view schematically illustrating a state where a metal magnetic powder is dispersed and oriented in a coating film from a process for forming a coating film (Step S102) to a process for drying the sheet (Step S103) illustrated in Fig. 3.

### DESCRIPTION OF SYMBOLS

1 composite magnetic sheet
10 metal magnetic powder
20 resin
31 slurry
41 PET film (support)

### BEST MODE FOR CARRYING OUT THE INVENTION

Hereinafter, preferable embodiments of the composite magnetic sheet and the method of producing the composite magnetic sheet according to the present invention will be described in detail with reference to the drawings. However, the present invention is not limited to the preferable embodiments described below.

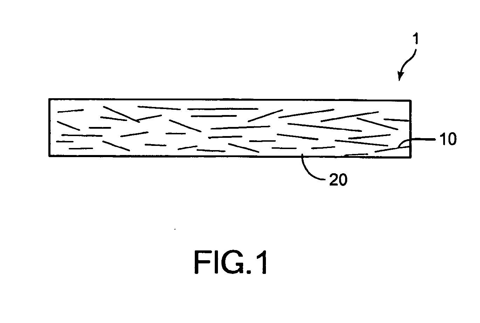

Fig. 1 is a schematic cross-sectional view of a composite magnetic sheet 1 according to an embodiment of the present invention. In Fig. 1, the longer side direction represents the longitudinal direction of the sheet, and the shorter side direction represents the thickness direction of the sheet.

As illustrated in Fig. 1, the composite magnetic sheet 1 is a sheet having a structure in which a metal magnetic powder 10 is dispersed in a resin 20. A shape of some or all of the metal magnetic powder 10 is a flat shape having a major axis and a minor axis. The flat metal magnetic powder 10 is dispersed while being oriented with the major axis aligned in the longitudinal direction of the composite magnetic sheet 1.

The metal magnetic powder 10 used in this embodiment is a powder containing iron-silicon as a main component. The dimension of the major axis (diameter of the major axis) of the metal magnetic powder 10 is in the range of not less than 5 µm and not more than 80 µm, and preferably in the range of not less than 10 µm and not more than 50 µm. When the diameter of the major axis is 5 µm or longer, the magnetic properties of the metal magnetic powder 10 are excellent. When the diameter of the major axis is 80 µm or shorter, the metal magnetic powder 10 is easily formed. In particular, in the case where coating is performed by a doctor blade method, the metal magnetic powder having a diameter of the major axis of 80 µm or shorter easily passes through the blade. The aspect ratio (major axis/minor axis) defined by the dimension ratio between the major axis and the minor axis is preferably not less than 5 and not more than 20. When the aspect ratio of the metal magnetic powder 10 is adjusted to 5 or higher, the metal magnetic powder 10 is easily oriented in one direction. When the aspect ratio thereof is adjusted to 20 or lower, a line is difficult to form in the sheet, and the metal magnetic powders 10 are difficult to form a bridge with each other in the resin 20, whereby a structure in which the metal magnetic powder 10 is oriented in one direction and the filling factor is high tends to form easily. The composite magnetic sheet 1 in which the metal magnetic powder 10 has been dispersed exhibits unique flexibility as a so-called fiber reinforcement material does. Therefore, the composite magnetic sheet 1 exhibits deflection strength which is not achieved in a rigid material (a sintered core material or a sheet material having no flexibility).

The thickness of the composite magnetic sheet 1 is preferably in the range of not less than 10 µm and not more than 250 µm, and more preferably in the range of not less than 100 µm and not more than 200 µm. When the thickness thereof is 10 µm or more, the proportion of deformation or cracking becomes low. When the thickness thereof is 250 µm or lower, the separation of the metal magnetic powder 10 and the resin 20 does not occur, and a thickness suitable as a magnetic member of a low height coil component is achieved.

The resin 20 preferably used in this embodiment is a resin which contains a bisphenol A type polymer epoxy resin and a polyfunctional epoxy resin as main components, to which an epoxy resin having a particular skeleton is added, and in which a bisphenol A type novolak resin is used as a curing agent. The weight ratio of the bisphenol A type polymer epoxy resin to the polyfunctional epoxy resin is preferably 2 : 1. Moreover, the addition amount of the epoxy resin having a particular skeleton is 0.25 to 1, and more preferably 0.3 to 0. 5 based on the above-mentioned main components. The addition amount of the curing agent is preferably 5 to 30% by weight based on the total amount of the above-mentioned main components, the epoxy resin having a particular skeleton, and the curing agent.

As a polyfunctional epoxy resin, epi-bis type, a glycidyl ether type, a diphenyl ether type, and an alicyclic epoxy group are mostly exemplified. In the case of the epi-bis type, for example, a glycidyl ether of a bisphenol type is preferable. Further, in the case of the glycidyl ether type, for example, a diglycidyl ether of methylfluoroglycine, a glycidyl ether of resorcin, or a diglycidyl ether of fluoroglycine is preferable. Further, in the case of the diphenyl ether type, for example, 4,4'-di(1,2-epoxyethyl)diphenyl ether is preferable. Further, in the case of the alicyclic epoxy group, for example, 3,4-epoxycyclohexylmethyl-(3,4-epoxy)cyclohexane carboxylate, bis-(2,3-epoxycyclopentyl)ether, 2-(3,4-epoxy)cyclohexane-5,5'spiro(3,4-epoxy)cyclohexane-m-dio xane, vinylcyclohexanedioxide, 2,2'-bis-(3,4-epoxycyclohexyl)propane, or bis-(3,4-epoxy-6-methylcyclohexyl)adipate is preferable. Moreover, examples of other special polyfunctional epoxy resins which may be used include a polyfunctional epoxy resin such as N,N'-m-phenylenebis-(4,5-epoxy-1,2'-cyclohexane)dicarboxyimide, and further, polyfunctional epoxy resins such as a triglycidylether of para-aminophenol, polyarylglycidylether, tetra glycidoxy tetraphenylethane, and 1,3,5-tri-(1,2-epoxyethyl)benzene. Of those, in consideration of performance balance such as flexibility, workability, punching ability, storage stability, and maintenance of elastic coefficiency, the availability as a raw material, and the problem of cost, an epi-bis type is preferably used.

As epoxy resins having a special skeleton, a biphenyl type, a bisphenol S type, a napthalene type, a cyclopentadiene type, an aralkyl type, a hydroquinone type, a novolac type, a tetraphenylolethane type, a trishydroxyphenylmethane type, and a dicyclopentadiene phenol type can be exemplified. When an epi-bis type epoxy resin as a polyfunctional epoxy resin is used, it is preferable to use a tetraphenylolethane type epoxy resin because the Tg value can be increased without degrading the characteristics, and the stability can also be improved.

As the curing agent, it is possible to use a kind of aromatic amines, acid anhydride, or a bisphenol A type novolak resin, and the bisphenol A type novolak resin is preferably used. By the use of the bisphenol A type novolak resin, the workability for forming the sheet can be remarkably improved through the use of a curing system utilizing the hydroxy group (-OH) while not degrading the performance of a basic skeleton.

In addition to the above-mentioned components, a curing accelerator can also be used. As the curing accelerator, it is preferable to blend an imidazole compound and/or an amine compound. As the imidazole compound, for example, imidazole, 2-methylimidazole, 2-ethylimidazole, 2,4-dimethylimidazole, 2-ethyl-4-methylimidazole, 2-heptadecylimidazole, and 2-undecylimidazole can be used. In the case of an amine compound, for example, triethylamine, triethylenetetramine, diethylenetriamine, and diethylamino propylamine can be used as fatty amines. Further, as cyclic amines, for example, N-aminoethyl piperazine, bis(4-amino-3-methylcyclohexylmethane), menthandiamine, meth-xylylene amine, and 3,9-bis(3-aminopropyl)-2,4,8,10,-tetraoxaspiro(5,5)undecane can be used. Of those, it is preferable to use an imidazole compound as the curing accelerator from the viewpoint of the improvement in workability (particularly, improvement in storage stability of a resin paste and a sheet). When the curing accelerator is used, the curing accelerator is not necessarily limited to one kind of accelerator, and two or more kinds thereof may be used in combination as required.

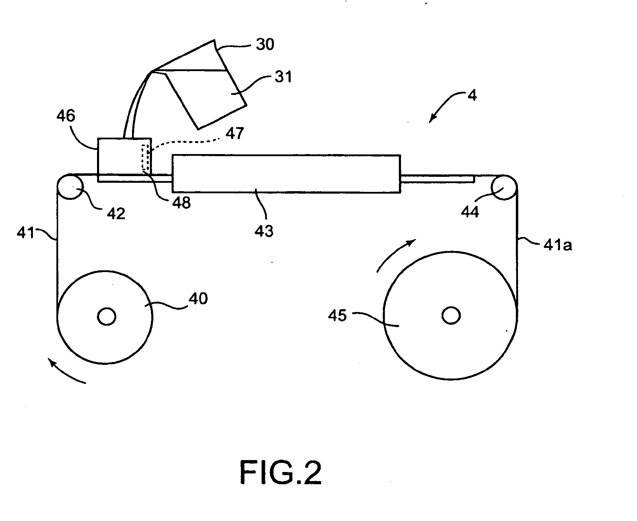

FIG. 2 is a schematic configuration diagramof a composite magnetic sheet production apparatus 4 to be used for a part of a production process for the composite magnetic sheet 1 according to an embodiment of the present invention.

The composite magnetic sheet production apparatus 4 has an ability of setting a temperature distribution with inclination in the range of from room temperature to about 150°C from a part where the production of the composite magnetic sheet 1 starts to a part where the production thereof is complete. Since a component of an organic solvent in a slurry needs to evaporate, the apparatus is structured so that the temperature can be set up to 150°C.

The composite magnetic sheet production apparatus 4 has an overall length of 8 m, and has an about 6 m part to be used for a drying process. The part to be used for a drying process is a part for evaporating an organic solvent. It is preferable to adjust each temperature from an insertion part to a discharge part to about 35°C and about 95°C.

The composite magnetic sheet production apparatus 4 is provided with a delivery roll 40 around which a PET film 41 is wound; a roller 42 for pulling out the PET film 41 from the delivery roll 40, and advancing the PET film 41 while changing the direction to a substantially right angle; a drying part 43 which has a structure of surrounding the periphery of the PET film 41 which is advanced by the rotation of the roller 42, the drying part being capable of adjusting a temperature up to 150°C; a roller 44 for advancing a PET film 41a with the composite magnetic sheet 1 in a semi-cured state discharged from the drying part 43 while changing the direction to a substantially right angle; a winding roller 45 for winding the PET film 41a which is advanced by the roller 44; and a coater head 46 arranged between the roller 42 and the drying part 43.

The coater head 46 has a shape of a container capable of supplying a slurry 31 previously produced in the container 30. The coater head 46 has a blade 47, and a gap 48 is formed between the blade 47 and the bottom portion of the coater head 46. The apparatus is structured so that the slurry 31 flows out of the gap 48 onto the PET film 41. It should be noted that the gap 48 can be adjusted in the range of 30 to 500 µm by moving the blade 47.

Next, a production procedure of the composite magnetic sheet 1 according to an embodiment of the present invention will be described.

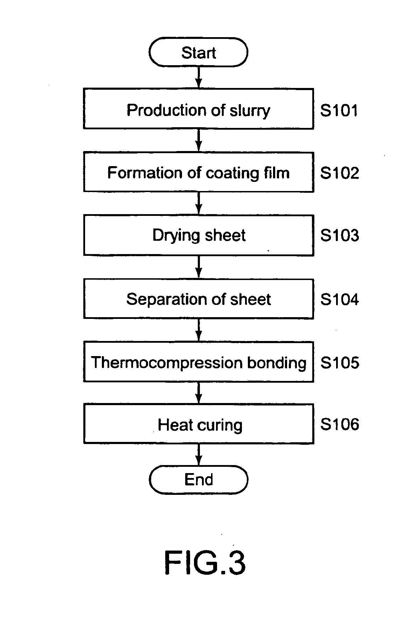

FIG. 3 is a flowchart illustrating a production process for the composite magnetic sheet 1 according to an embodiment of the present invention.

First, the metal magnetic powder 10 and the resin 20 which are used for the composite magnetic sheet 1 are mixed in an organic solvent to produce the slurry 31 (Step S101). In this embodiment, a powder containing iron-silicon as a main component can be preferably used as the metal magnetic powder 10, and a mixture of the bisphenol A type polymer epoxy resin, bisphenol type glycidyl ether, tetraphenylolethane type epoxy resin, and bisphenol A type novolak resin can be preferably used as the resin 20. As the weight ratio of the metal magnetic powder 10 to the resin 20, when the metal magnetic powder 10 is 100, it is preferable to adjust the proportion of the resin 20 to larger than 2. In such a ratio, the strength and the dispersibility of the metal magnetic powder 10 can be further improved. As the organic solvent, toluene, ethyl alcohol, and methyl ethyl ketone can be preferably used singly or in an arbitrary combination thereof. To the slurry 31, diethyl phthalate which is a kind of a solvent having a high boiling point can also be added as a plasticizer. The viscosity of the slurry 31 is preferably adjusted to 1,000 to 5,000 mPa·s. When the viscosity of the slurry 31 is adjusted to the viscosity in the above-mentioned range, the dispersibility and orientation ability of the metal magnetic powder 10 can be further improved.

Next, the slurry 31 contained in the container 30 is put in the coater head 46, and then, the slurry 31 is applied onto the PET film 41 from the gap 48 to thereby form a coating film on the PET film 41 (Step S102). When the slurry 31 is applied, the PET film 41 is heated by a heating means (not illustrated) in such a manner that the temperature becomes about 50°C. Subsequently, the PET film 41 on which the coating filmhas been formed is transferred into the drying part 43, and the coating film (which forms the composite magnetic sheet 1 after drying) is dried under heating from 50°C to 80°C (Step S103). Then, the PET film 41a with the composite magnetic sheet 1 is wound up by the winding roller 45 while being sent to the roller 44.

The PET film 41a with the composite magnetic sheet 1 wound up by the winding roller 45 is cut off to pieces having an appropriate length and dimension, and the composite magnetic sheet is then separated from the PET film 41 (Step S104). It should be noted that, prior to Step S104, the cut-off PET film 41a with the composite magnetic sheet 1 may be dried under appropriate drying conditions for further volatilization of the organic solvent. Next, a plurality of the separated composite magnetic sheets 1 are laminated, and then subjected to thermocompression bonding in a die at a temperature of 60 to 80°C at a pressure of 19,6 to 196 MPa (200 to 2, 000 kg/cm²) (Step S105). The composite magnetic sheet 1 after thermocompression bonding is cut off to pieces having an appropriate shape, and then subjected to heat-curing treatment under the curing conditions of a temperature of 200°C and a treatment period of time of 2 hours (Step S106).

Moreover, in this embodiment, although the doctor blade method is employed as a coating method, other methods such as a comma coater method can be preferably used. However, the above-mentioned coating method is merely one example, and thus, coating methods other than the above may be employed.

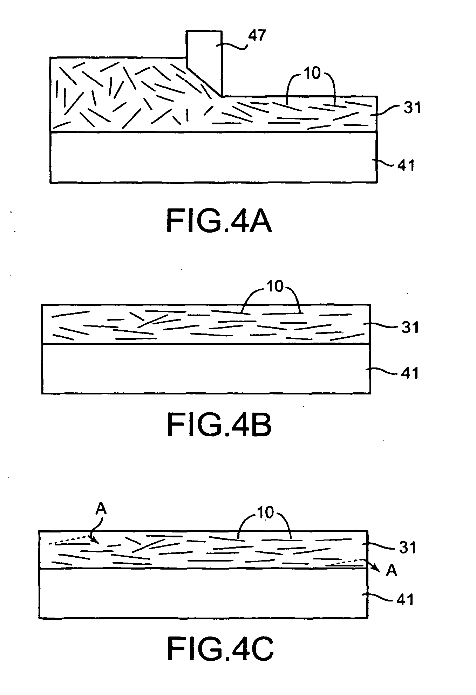

Next, a state where the metal magnetic powder 10 is dispersed and oriented in a coating film from the process for forming the coating film (Step S102) to the process for drying the sheet (Step S103) illustrated in Fig. 3 will be described with reference to Fig. 4.

In the initial state (4A) where the slurry 31 is applied onto the PET film 41, the metal magnetic powder 10 is dispersed in the slurry 31 with the powder aligned in random directions. However, when the slurry 31 passes through the blade 47, a strong shearing force is applied to the slurry in the upward and downward directions, whereby the flow direction becomes parallel to the plane direction of the PET film 41. Moreover, simultaneously with the above, as illustrated in Fig. 4(4B), the metal magnetic powder 10 also substantially falls down in the plane direction of the PET film 41 due to the high aspect ratio and the strong shearing force of the blade 47 in the upward and downward directions. Thereafter, as illustrated in Fig. 4(4C), the metal magnetic powder 10 further falls down until the process proceeds to the drying process, and then the orientation is complete (the metal magnetic powder 10 tends to be in the state indicated by the solid line indicated by the arrow A from the state indicated by the dotted line in Fig. 4(4C)). It should be noted that although the proportion with which the metal magnetic powder 10 in the vicinity of the surface of the slurry 31 precipitates near the bottom of the PET film 41 is low, such a metal magnetic powder 10 is deposited on the already dispersed and oriented metal magnetic powder 10. In the process from the precipitation process to the deposition process, most of the metal magnetic powder 10 is oriented in the longitudinal direction of the PET film 41.

Each embodiment of the composite magnetic sheet and the method of producing the composite magnetic sheet according to the present invention were described as above. However, the composite magnetic sheet and the method of producing the composite magnetic sheet according to the present invention are not limited to the above-described embodiments, and can be implemented in various modified embodiments.

For example, the composite magnetic sheet 1 in a semi-cured state after the drying process (Step S103) does not suffer from deformation of the sheet due to heat and adhesion due to melting, and has a feature that such a composite magnetic sheet 1 is easily integrated when laminated. Therefore, the composite magnetic sheet 1 in a semi-cured state may not be separated from the PET film 41, and may be stored while the entire surface is covered with another PET film or the like. Thus, the composite magnetic sheet 1 in a semi-cured state can be prevented from drying, and is advantageous in maintaining adhesiveness or the like.

### EXAMPLES

Next, Examples of the composite magnetic sheet and the method of producing the composite magnetic sheet according to the present invention will be described together with Comparative Examples. However, the present invention is not limited to Examples. In the following Examples, the same descriptions for the common implementation method in each Example are omitted.

### (Examples 1 to 5)

### A. Production procedure of composite magnetic sheet

According to the formulation shown in Table 1, an epoxy resin composition containing a bisphenol A type polymer epoxy resin (Ea), polyfunctional epoxy resin (Eb), epoxy resin (Ec) having a particular skeleton, and bisphenol A type novolak resin (Ed) was mixed with toluene (St), ethyl alcohol (Sa), and methyl ethyl ketone (Sm) which areorganicsolvents. In the mixture, a metal magnetic powder (Sample A) containing iron-silicon as a main component, having a major-axis average particle diameter (L) of 5.0 µm, and having an aspect ratio (R) between the major axis (L) and the minor axis (D) of 5 was put, and then stirred. Further, diethyl phthalate which is a solvent having a high boiling point as a plasticizer was added, and then, the whole was mixed in a polypot for about 24 hours to thereby give a slurry. In Table 1, the total amount of resin(%), the total amount of solvent(%), and a solvent having a high boiling point(%) each are a weight ratio when the metal magnetic powder is 100% by weight. The amounts (%) are defined similarly as above in the following tables.

Next, the slurry was applied onto the PET film by a doctor blade method. The gap of the coater head for flowing out the slurry was adjusted in the range of 300 to 500 µm as shown in Table 1. When the slurry was applied, the PET film during the application was adjusted to be 50°C. Thereafter, the composite magnetic sheet was dried by heating from 50°C to 80°C. After drying, the composite magnetic sheet was separated from the PET film, and then collected. Thus, composite magnetic sheets in a semi-cured state produced under the respective conditions were obtained.

### B. Evaluation of properties of composite magnetic sheet

The appearance of each of the obtained composite magnetic sheets in a semi-cured state was visually analyzed. Moreover, the orientation ability of the metal magnetic powder and the voids of the composite magnetic sheets were analyzed under the electron microscope. Moreover, the flexibility of each of the composite magnetic sheets was also analyzed by bending the composite magnetic sheet. Further, in order to analyze the properties of the composite magnetic sheets, the following processing treatment was performed. First, the obtained composite magnetic sheet was cut into pieces having a shape of an about 2.5 mm square, and a plurality of the cut sheets were laminated. The laminate was placed in a die, and subjected to thermocompression bonding at an application temperature of 60°C to 80°C and at a pressure of 19,6 to 196 MPa (200 kg/cm² to 2,000 kg/cm²) under appropriate conditions based on the resin amount of each sheet. The obtained sample was cut into pieces having a toroidal shape, and heat cured under the curing conditions of a temperature of 200°C and a curing period of time of 2 hours. The heat-cured sheet was wound with a winding wire to produce an inductor, and then the permeability was measured. Moreover, the above-mentioned partial small piece was cut off, and then thermally analyzed for the measurement of Tg. Each composite magnetic sheet square sample piece (2 mm x 2 mm x 20 mm) was prepared, and a three-point bending test was performed, in which both the ends were fixed and a load was applied to the central part. Then, the strength of the sheet was evaluated based on whether the sheet was damaged while being pushed to 1 mm. The sample which was not damaged when pushed to 1 mm was evaluated as "Excellent", and the samples which were damaged before reaching the depth of 1 mm by pushing were evaluated as "Fragile", "Slightly fragile" or the like according to the pushing degree. The evaluation results of the properties of the composite magnetic sheets were shown in Table 1.

As shown in Table 1, each composite magnetic sheet produced under the conditions of each of Examples 1 to 5 had a Tg of 100°C or more and a permeability (µ) of 10 or more. Any of those sheets had a high strength and few voids in the sheet, which showed that the evaluation results of properties were excellent. It should be noted that, in the composite magnetic sheet obtained in Example 1, the agglomeration of metal magnetic powder was observed, and, in contrast, each composite magnetic sheet obtained in Examples 2 to 5 hardly showed the agglomeration of metal magnetic powder, and was an excellent sheet. Moreover, in the composite magnetic sheets produced under the conditions of Examples 3 to 5, a high orientation ability of the metal magnetic powder was recognized, and, in contrast, in the composite magnetic sheets produced under the conditions of Examples 1 to 2, the orientation abilitywas slightly low. In view of the results, in order to produce a composite magnetic sheet, it is possibly desirable that the resin amount be larger than 2% by weight.

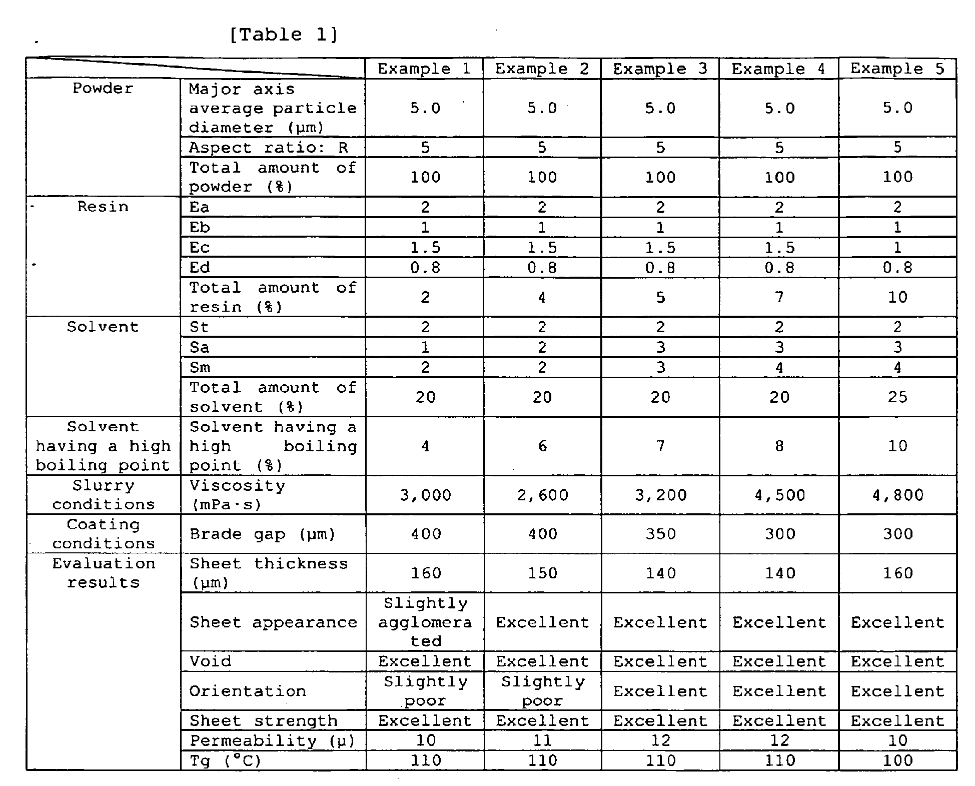

### (Examples 6 to 15)

### A. Production procedure for composite magnetic sheet

In Examples 6 to 15, a metal magnetic powder (Sample B) containing iron-silicon as a main component, having a major-axis average particle diameter (L) of 35.0 µm, and having an aspect ratio (R) of 15 was used. Based on the formulation shown in Table 2, the metal magnetic powder (Sample B) was mixed by stirring with resin compositions (Ea, Eb, Ec, and Ed), organic solvents (St, Sa, and Sm), and a solvent having a high-boiling point as a plasticizer. The production procedure is the same as that of each of Examples 1 to 5.

### B. Evaluation of properties of composite magnetic sheet

The evaluation of properties was performed in the same manner as in Examples 1 to 5. Tables 2 and 3 show the evaluation results of properties of each composite magnetic sheet obtained under the conditions of each of Examples 6 to 15.

As shown in Tables 2 and 3, each composite magnetic sheet produced under the respective conditions of Examples 6 to 15 had a Tg of 90°C or more and a permeability (µ) of 10 or more. Moreover, the composite magnetic sheets produced under the conditions of Examples 7 to 10 were excellent particularly in the sheet appearance, low void ratio, high orientation ability, and high strength of the sheet. In contrast, the composite magnetic sheets produced under the respective conditions of Examples 6 and 11 were relatively easily agglomerated, had a relatively many voids, and had a slightly low sheet strength. This is possibly because the total amount of resin was 2% by weight or lower. In view of the results, in order to produce a composite magnetic sheet, it is desirable to adjust the resin amount to more than 2% by weight as in Examples 1 to 5.

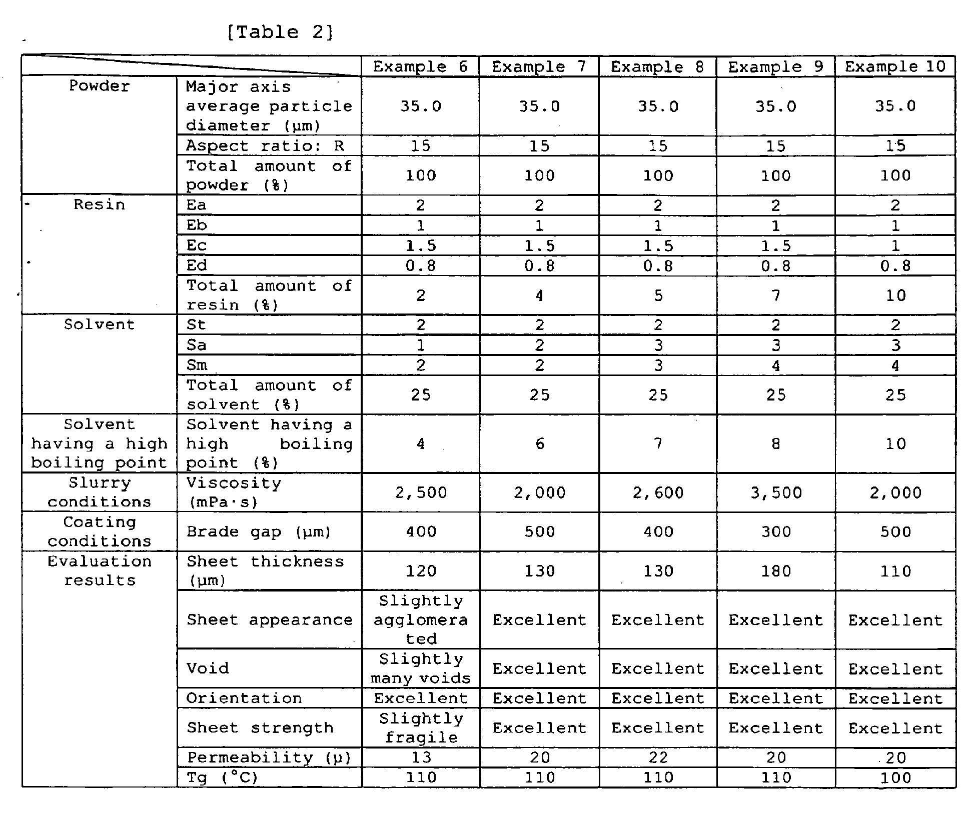

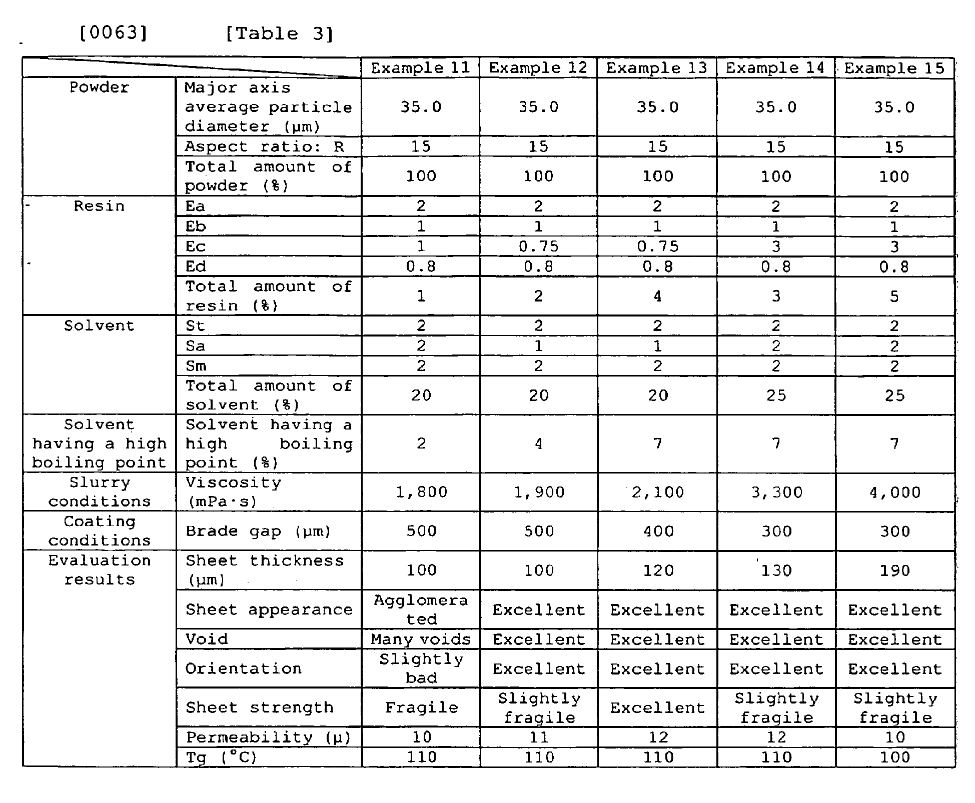

### (Examples 16 to 20)

### A. Production procedure for composite magnetic sheet

In Examples 16 to 20, a metal magnetic powder (Sample C) containing iron-silicon as a main component, having a major-axis average particle diameter (L) of 20.0 µm, and having an aspect ratio (R) of 20 was used. Based on the formulation shown in Table 4, the metal magnetic powder (Sample C) was mixed by stirring with resin compositions (Ea, Eb, Ec, and Ed), organic solvents (St, Sa, and Sm), and a solvent having a high-boiling point as a plasticizer. The production procedure is the same as that of each of Examples 1 to 5 described above.

### B. Evaluation of properties of composite magnetic sheet

The evaluation of properties was performed in the same manner as in Examples 1 to 5. Table 4 shows the evaluation results of properties of each composite magnetic sheet obtained under the conditions of each of Examples 16 to 20.

As shown in Table 4, each composite magnetic sheet produced under the respective conditions of Examples 16 to 20 had a Tg of 100°C or more and a permeability (µ) of 10 or more. Moreover, the composite magnetic sheets produced under the conditions of Examples 17 to 19 were excellent particularly in the sheet appearance, low void ratio, high orientation ability, and high strength of the sheet. In contrast, the composite magnetic sheet produced under the conditions of Example 16 was relatively easily agglomerated, had a relatively many voids, and had a slightly low sheet strength, because the total amount of resin was 2% by weight.

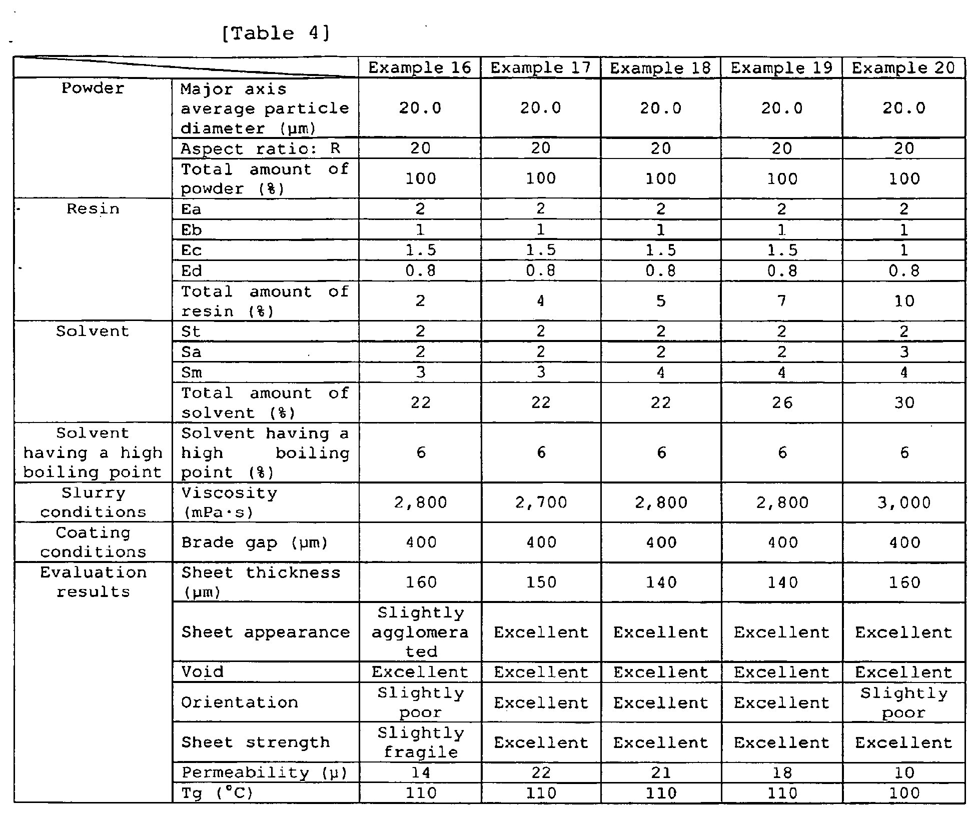

### (Examples 21 to 24)

### A. Production procedure for composite magnetic sheet

In Examples 21 to 24, a metal magnetic powder (Sample D) containing iron-silicon as a main component, having a major-axis average particle diameter (L) of 80.0 µm, and having an aspect ratio (R) of 20 was used. Based on the formulation shown in Table 5, the metal magnetic powder (Sample D) was mixed by stirring with resin compositions (Ea, Eb, Ec, and Ed), organic solvents (St, Sa, and Sm), and a solvent having a high-boiling point as a plasticizer. The production procedure is the same as that of each of Examples 1 to 5 described above.

### B. Evaluation of properties of composite magnetic sheet

The evaluation of properties was performed in the same manner as in Examples 1 to 5. Table 5 shows the evaluation results of properties of each composite magnetic sheet obtained under the conditions of each of Examples 21 to 24.

As shown in Table 5, each composite magnetic sheet produced under the respective conditions of Examples 21 to 24 had a Tg of 100°C or more and a permeability (µ) of 10 or more. Moreover, the composite magnetic sheets produced under the conditions of Examples 22 to 24 were excellent particularly in the sheet appearance, low void ratio, high orientation ability, and high strength of the sheet. In contrast, the composite magnetic sheet produced under the conditions of Example 21 had some voids due to agglomeration of the metal magnetic powder, because the total amount of resin was as low as 2% by weight.

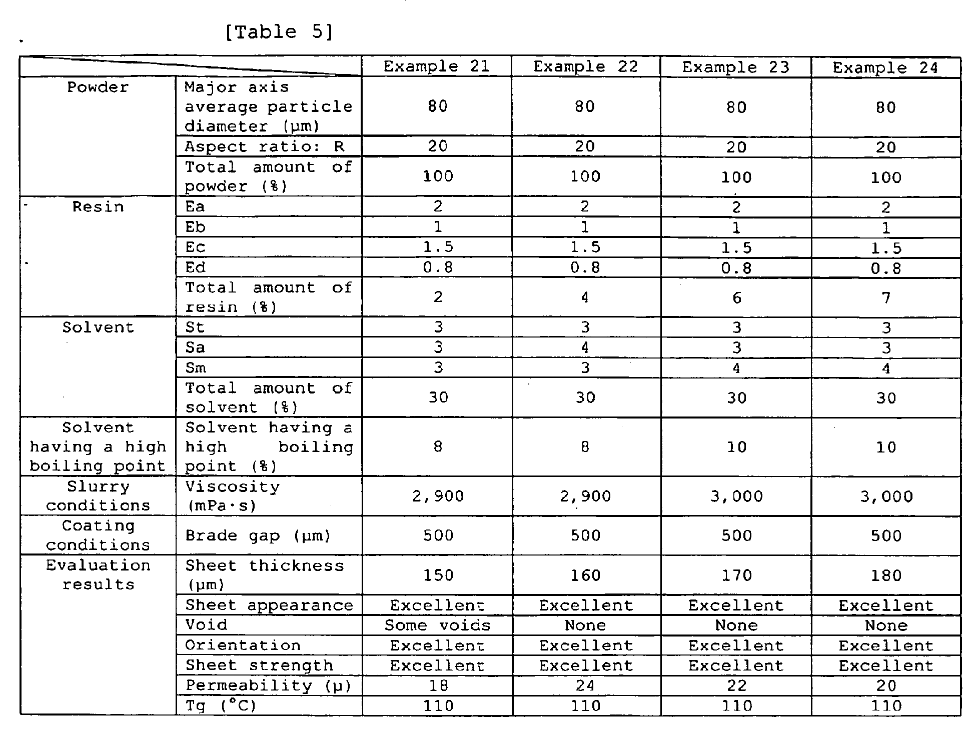

### (Comparative Examples 1 to 4)

### A. Production procedure for composite magnetic sheet

In Comparative Examples 1 to 4, a metal magnetic powder (Sample E) containing iron-silicon as a main component, having a major-axis average particle diameter (L) of 3.0 µm, and having an aspect ratio (R) of 5 was used. Based on the formulation shown in Table 6, the metal magnetic powder (Sample E) was mixed by stirring with resin compositions (Ea, Eb, Ec, and Ed), organic solvents (St, Sa, and Sm), and a solvent having a high-boiling point as a plasticizer. The production procedure is the same as that of each of Examples 1 to 5 described above.

### B. Evaluation of properties of composite magnetic sheet

The evaluation of properties was performed in the same manner as in Examples 1 to 5. Table 6 shows the evaluation results of properties of each composite magnetic sheet obtained under the conditions of each of Comparative Examples 1 to 4.

As shown in Table 6, the composite magnetic sheets obtained under the respective conditions of Comparative Examples 1 to 4 each had a Tg of 100°C or higher. However, the permeability (µ) of each sheet was 5 or lower. Moreover, when the appearance of each sheet was observed, lines were hardly formed and the orientation ability of the metal magnetic powder was low. The fact that almost no lines were formed is possibly because the metal magnetic powder successfully passed smoothly through the gaps due to the low aspect ratio of the metal magnetic powder. Moreover, the fact that the orientation ability was low and the permeability was low is possibly because the aspect ratio of the metal magnetic powder was low, resulting in that the metal magnetic powder was difficult to be oriented in parallel to the surface of the sheet, which reduced the filling factor of the metal magnetic powder.

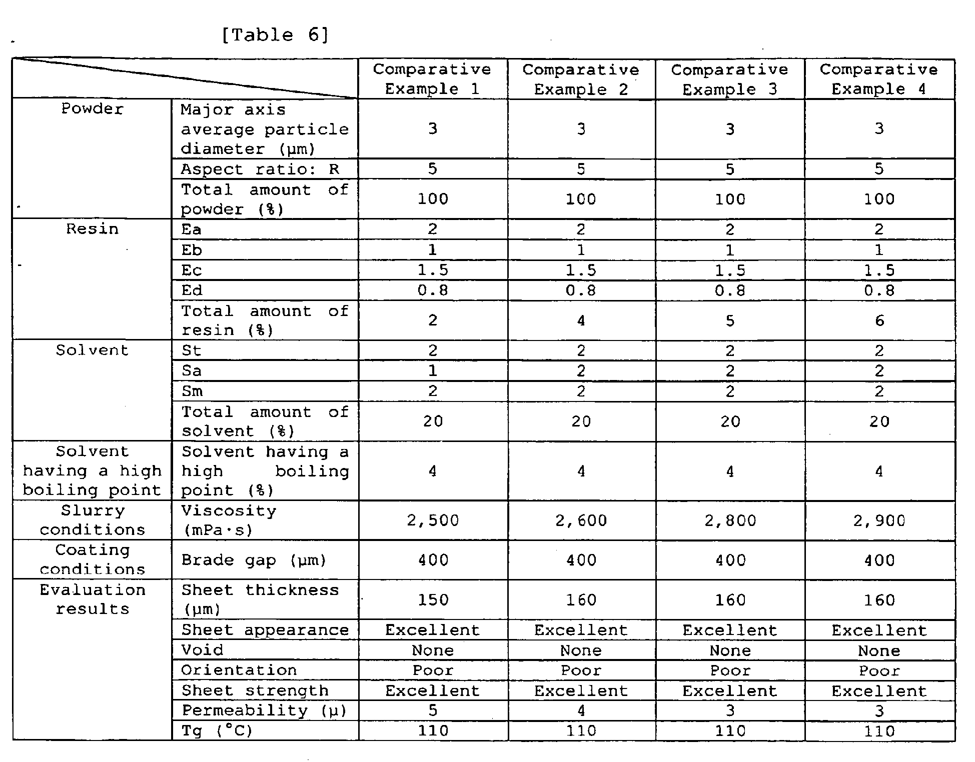

### (Comparative Examples 5 to 9)

### A. Production procedure for composite magnetic sheet

In Comparative Examples 5 to 9, a metal magnetic powder (Sample F) containing iron-silicon as a main component, having a major-axis average particle diameter (L) of 65.0 µm, and having an aspect ratio (R) of 25 was used. Based on the formulation shown in Table 7, the metal magnetic powder (Sample F) was mixed by stirring with resin compositions (Ea, Eb, Ec, and Ed), organic solvents (St, Sa, and Sm), and a solvent having a high-boiling point as a plasticizer. The production procedure is the same as that of each of Examples 1 to 5 described above.

### B. Evaluation of properties of composite magnetic sheet

The evaluation of properties was performed in the same manner as in Examples 1 to 5. Table 7 shows the evaluation results of properties of each composite magnetic sheet obtained under the conditions of each of Comparative Examples 5 to 9.

As shown in Table 7, the composite magnetic sheets obtained under the respective conditions of Comparative Examples 5 to 9 had a Tg of 100°C or higher and a permeability (µ) of 10 or more. When the appearance of each sheet was observed, the formation of lines was noticeable, and the orientation ability of the metal magnetic powder was slightly poor. The noticeable formation of lines is possibly caused by the fact that the metal magnetic powder having an aspect ratio as high as 25 was used, resulting in that the metal magnetic powder did not successfully pass smoothly through the gaps, and thus, the powder was caught by the blade. The lines cause the reduction in the strength of the composite magnetic sheet and the development of the variation of a thickness dimension, and thus are not preferable. Further, as shown in the evaluation results of properties of Comparative Example 5, it was revealed that when the total amount of resin was small, the strength of the composite magnetic sheet was low, or many voids were formed therein, resulting in lower properties.

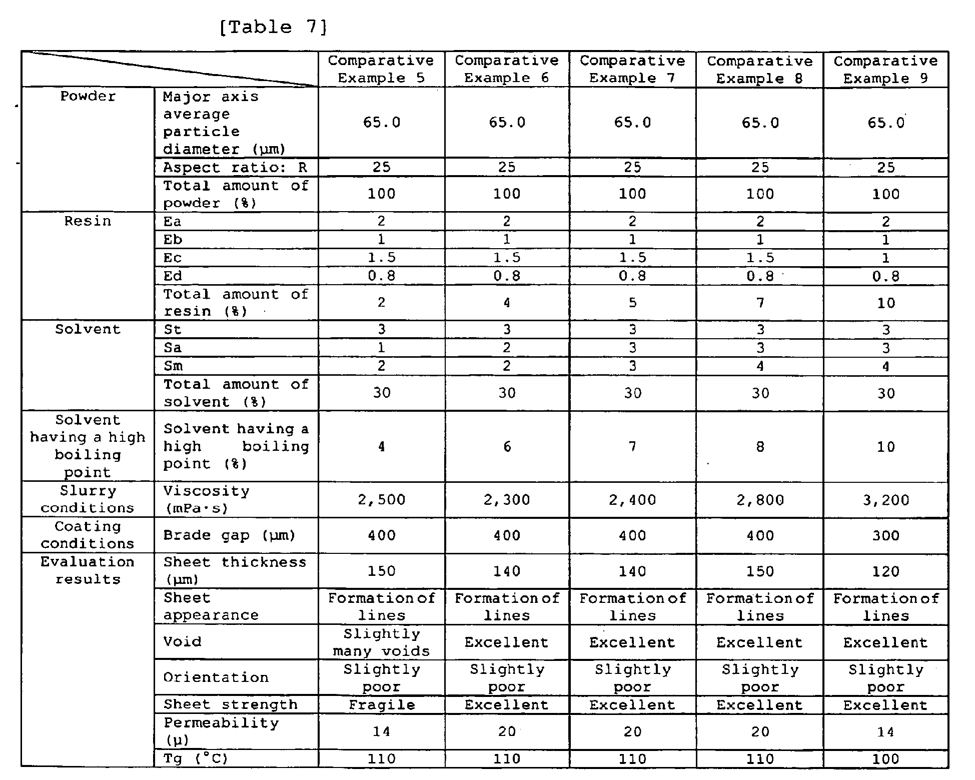

### (Comparative Examples 10 to 13)

### A. Production procedure for composite magnetic sheet

In Comparative Examples 10 to 13, a metal magnetic powder (Sample G) containing iron-silicon as a main component, having a major-axis average particle diameter (L) of 100.0 µm, and having an aspect ratio (R) of 25 was used. Based on the formulation shown in Table 8, the metal magnetic powder (Sample G) was mixed by stirring with resin compositions (Ea, Eb, Ec, and Ed), organic solvents (St, Sa, and Sm), and a solvent having a high-boiling point as a plasticizer. The production procedure is the same as that of each of Examples 1 to 5 described above.

### B. Evaluation of properties of composite magnetic sheet

The evaluation of properties was performed in the same manner as in Examples 1 to 5. Table 8 shows the evaluation results of properties of each composite magnetic sheet obtained under the conditions of each of Comparative Examples 10 to 13.

As shown in Table 8, any composite magnetic sheets obtained under the respective conditions of Comparative Examples 10 to 13 had a Tg of 100°C or higher. Moreover, the orientation ability of the metal magnetic powder was high. However, the appearance of each sheet had many lines, and was in a condition where the PET film was exposed without being coated, and thus, the sheet part was separated. Therefore, the permeability (µ) was unmeasurable. In addition, since the coating condition was that mentioned as above, the strength of the sheet was excessively low. Such a sheet condition is possibly caused by the fact that the major-axis average diameter of the metal magnetic powder was excessively large, and thus, the powder was caught at the time of coating.

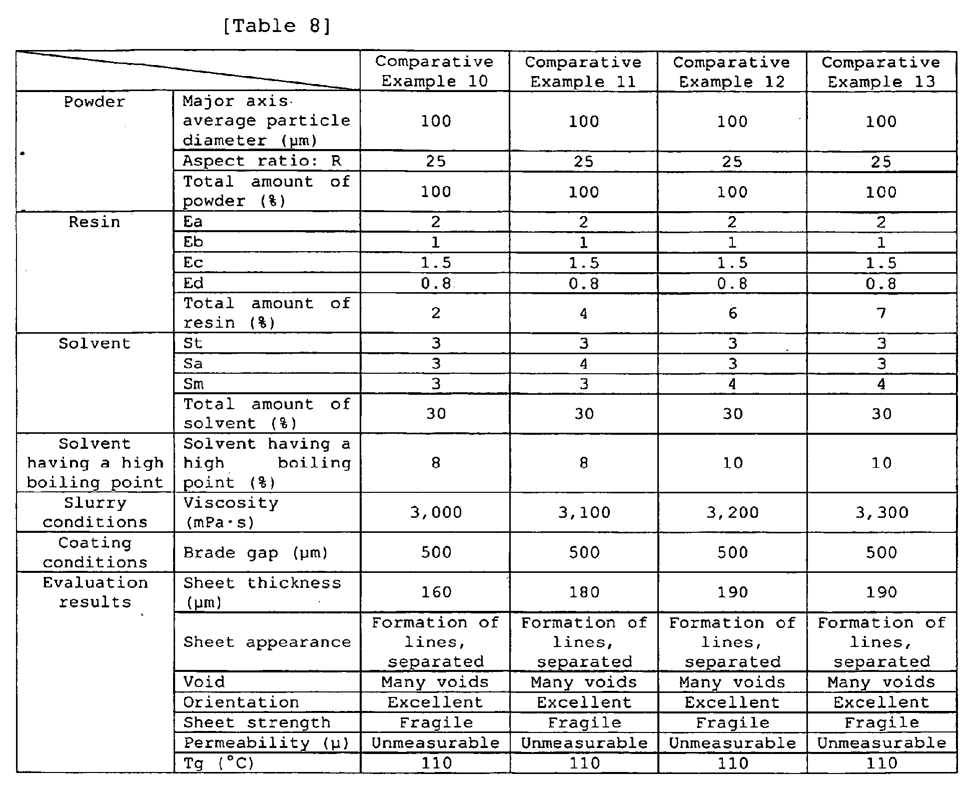

### Industrial Applicability

The present invention can be utilized in the industry of producing or using a composite magnetic sheet.

## Claims

1. A composite magnetic sheet, comprising at least a resin and a metal magnetic powder, in which
the metal magnetic powder contains flat magnetic particles having a major axis and a minor axis;
a diameter of the major axis of the flat particles is in a range of not less than 5 µm and not more than 80 µm;
an aspect ratio defined by a dimension ratio between the major axis and the minor axis is in a range of not less than 5 and not more than 20 ;
the metal magnetic powder is dispersed so that the major axis is aligned in parallel along a surface of the composite magnetic sheet,
**characterised in that**
the resin comprises at least an epoxy resin having a Tg in the range of 90°C to 120°C as a main component in which an epoxy resin having a particular skeleton is added,
wherein the epoxy resin being the main component is one of the following: a resin containing a bisphenol A type polymer epoxy resin, a bisphenol AD type epoxy resin, a bisphenol F type epoxy resin, a bisphenol S type epoxy resin, a naphtalene type epoxy resin or a biphenyl type epoxy resin, and
wherein the added epoxy resin having a particular skeleton is one of the following: a biphenyl type resin, a bisphenol S type resin, a naphtalene type resin, a cyclopentadiene type resin, an aralkyl type resin, a hydroquinone type resin, a novolac type resin, a tetraphenylolethane type resin, a trishydroxyphenylmethane type resin or a dicyclopentadiene phenol type resin; and
wherein the weight ratio of the epoxy resin having a particular skeleton to the main component is 0.25 to 1.

2. A composite magnetic sheet according to claim 1, wherein a thickness of the composite magnetic sheet is in a range of not less than 10 µm and not more than 250 µm.

3. A composite magnetic sheet according to claim 1 or 2, wherein the resin being the main component contains a bisphenol A type polymer epoxy resin and a polyfunctional epoxy resin and the weight ratio of the bisphenol A type polymer epoxy resin to the polyfunctional epoxy resin is 2:1.

4. A method of producing a compositemagnetic sheet comprising at least a resin and a metal magnetic powder, the method comprising:
mixing the metal magnetic powder, the resin, and an organic solvent to produce a slurry; the metal magnetic powder containing flat particles having a maj or axis and a minor axis, the flat particles having a diameter of the major axis of the flat particles in a range of not less than 5 µm and not more than 80 µm, and having an aspect ratio defined by a dimension ratio between the major axis and the minor axis in a range of not less than 5 and not more than 20;
applying the slurry onto a support to form a coating film; and
drying the coating film
**characterised in that**
the resin is obtained by mixing at least an epoxy resin having a Tg in the range of 90°C to 120°C as a main component with an additional epoxy resin having a particular skeleton, with a weight ratio of the epoxy resin having a particular skeleton to the main component of 0.25 to 1,
wherein the epoxy resin being the main component is one of the following: a resin containing a bisphenol A type polymer epoxy resin and a polyfuctional epoxy resin, a bisphenol AD type epoxy resin, a bisphenol F type epoxy resin, a bisphenol S type epoxy resin, a naphtalene type epoxy resin or a biphenyl type epoxy resin, and
wherein the added epoxy resin having a particular skeleton is one of the following: a biphenyl type resin, a bisphenol S type resin, a naphtalene type resin, a cyclopentadiene type resin, an aralkyl type resin, a hydroquinone type resin, a novolac type resin, a tetraphenylolethane type resin, a trishydroxyphenylmethane type resin or a dicyclopentadiene phenol type resin.

5. A method of producing a composite magnetic sheet according to claim 4, wherein a thickness of the composite magnetic sheet after being dried is in a range of not less than 10 µm and not more than 250 µm.

## Patentansprüche

1. Magnetische Verbundfolie, die mindestens ein Harz und ein magnetisches Metallpulver aufweist,
wobei das magnetische Metallpulver flache magnetische Partikel beinhaltet, die eine Hauptachse und eine Nebenachse haben;
wobei ein Durchmesser der Hauptachse der flachen Partikel im Bereich von nicht kleiner als 5 µm und nicht größer als 80 µm ist;
wobei ein Längenverhältnis, welches definiert ist aus dem Abmessungsverhältnis zwischen der Hauptachse und der Nebenachse, im Bereich von nicht weniger als 5 und nicht mehr als 20 ist;
wobei das magnetische Metallpulver so verteilt ist, dass die Hauptachse parallel entlang der Oberfläche der magnetischen Verbundfolie ausgerichtet ist,
**dadurch gekennzeichnet, dass**
das Harz mindestens ein Epoxidharz aufweist mit einem Tg im Bereich von 90°C bis 120°C als eine Hauptkomponente, in das ein Epoxidharz mit einer bestimmten Struktur hinzugefügt ist,
wobei das Epoxidharz, das die Hauptkomponente bildet, eines der folgenden ist: ein Harz beinhaltend ein Typ Bisphenol A Polymer Epoxidharz, ein Typ Bisphenol AD Epoxidharz, ein Typ Bisphenol F Epoxidharz, ein Typ Bisphenol S Epoxidharz, ein Typ Naphtalen Epoxidharz oder ein Typ Biphenyl Epoxidharz, und
wobei das hinzugefügte Epoxidharz mit einer bestimmten Struktur eines der folgenden ist:
ein Typ Biphenyl Harz, ein Typ Bisphenol S Harz, ein Typ Naphtalen Harz, ein Typ Cyclopentadien Harz, ein Typ Aralklyl Harz, ein Typ Hydrochinon Harz, ein Typ Novolak Harz, ein Typ Tetraphenylolethan Harz, ein Typ Trishydroxphenylmethan Harz oder ein Typ Dicyclopentadien Phenol Harz; und
wobei das Gewichtsverhältnis zwischen dem Epoxidharz, welches eine bestimmte Struktur hat, und der Hauptkomponente 0,25 zu 1 ist.

2. Magnetische Verbundfolie nach Anspruch 1, wobei eine Dicke der magnetischen Verbundfolie im Bereich von nicht weniger als 10 µm und nicht mehr als 250 µm ist.

3. Magnetische Verbundfolie nach dem Anspruch 1 oder 2, wobei das Harz, welches die Hauptkomponente bildet, ein Typ Bisphenol A Polymer Epoxidharz und ein polyfunktionales Epoxidharz beinhaltet und das Gewichtsverhältnis des Typ Bisphenol A Polymer Epoxidharz zu dem polyfunktionalen Epoxidharz 2:1 ist.

4. Verfahren zur Herstellung einer magnetischen Verbundfolie, die mindestens ein Harz und ein magnetisches Metallpulver aufweist, wobei das Verfahren folgendes aufweist:
Mischen des magnetischen Metallpulvers, des Harzes und eines organischen Lösungsmittels, um einen Brei herzustellen; das magnetische Metallpulver beinhaltet flache Partikel, die eine Hauptachse und eine Nebenachse haben, die flachen Partikel besitzen einen Durchmesser der Hauptachse der flachen Partikel im Bereich von nicht kleiner als 5 µm und nicht größer als 80 µm und besitzen ein Lagerverhältnis, welches definiert ist durch das Abmessungsverhältnis der Hauptachse und der Nebenachse, welches im Bereich von nicht weniger als 5 und nicht mehr als 20 ist;
Auftragen des Breis auf einen Träger um eine Filmbeschichtung zu bilden;
und
Trocknen der Filmbeschichtung,
**dadurch gekennzeichnet, dass**
das Harz erhalten wird durch Mischen von mindestens einem Epoxidharz, mit einem Tg im Bereich von 90°C bis 120°C als Hauptkomponente mit einem zusätzlichen Epoxidharz, welches eine bestimmte Struktur hat, zu einem Gewichtsverhältnis zwischen dem Epoxidharz, welches eine bestimmte Struktur hat, und der Hauptkomponente von 0,25 zu 1,
wobei das Epoxidharz, welches die Hauptkomponente bildet, eines der folgenden ist: ein Harz aufweisend ein Typ Bisphenol A Polymer Epoxidharz und ein polyfunktionales Epoxidharz, ein Typ Bisphenol AD Epoxidharz, ein Typ Bisphenol F Epoxidharz, ein Typ Bisphenol S Epoxidharz, ein Typ Naphtalen Epoxidharz oder ein Typ Biphenyl Epoxidharz,
und
wobei das hinzugefügte Epoxidharz, welches eine bestimmte Struktur hat, eines der folgenden ist: ein Typ Biphenyl Harz, ein Typ Bisphenol S Harz, ein Typ Naphtalen Harz, ein Typ Cyclopentadien Harz, ein Typ Aralklyl Harz, ein Typ Hydrochinon Harz, ein Typ Novolak Harz, ein Typ Tetraphenylolethan Harz, ein Typ Trishydroxphenylmethan Harz oder ein Typ Dicyclopentadien Phenol Harz.

5. Verfahren zur Herstellung einer magnetischen Verbundfolie nach Anspruch 4, wobei eine Dicke der magnetischen Verbundfolie nach dem Trocknen im Bereich von nicht weniger als 10 µm und nicht mehr als 250 µm ist.

## Revendications

1. Une feuille magnétique composite comprenant au moins résine et une poudre magnétique métallique, dans laquelle
la poudre magnétique métallique contient des particules magnétiques plates présentant un axe majeur et un axe mineur ;
un diamètre de l'axe majeur des particules plates se situe dans une fourchette allant de ni moins de 5µm à ni plus de 80µm.
un rapport d'aspect défini par un rapport de dimension entre l'axe majeur et l'axe mineur se situe dans une fourchette allant de ni moins de 5 à ni plus de 20 ;
la poudre magnétique métallique est dispersée de manière à ce que l'axe majeur soit aligné parallèlement à une surface de la feuille magnétique composite,
**caractérisée en ce que**
la résine comprend au moins un composant principal qui est une résine époxy ayant un Tg se situant dans la fourchette 90°C à 120°C, auquel est ajoutée une résine époxy présentant une structure particulière,
où la résine époxy qui est le composant principal est une des résines suivantes : une résine contenant une résine d'époxy polymère de type bisphénol A, une résine époxy de type bisphénol AD, une résine époxy de type bisphénol F, une résine époxy de type bisphénol S, une résine époxy de type naphtaline ou une résine époxy de type biphényle, et
où la résine époxy ajoutée présentant une structure particulière est une des résines suivantes : une résine de type biphényle, une résine de type bisphénol S, une résine de type naphtaline, une résine de type cyclopentadiène, une résine de type aralkyle, une résine de type hydroquinone, une résine de type novolaque, une résine de type tétraphényloléthane, une résine de type trishydroxyphénylméthane ou une résine de type phénoledicyclopentadiène ; et
où le rapport d'aspect de la résine époxy ayant une structure particulière et du composant principal est 0,25 à 1.

2. Une feuille magnétique composite selon la Revendication 1, où l'épaisseur de la feuille magnétique composite se situe dans une fourchette allant de ni moins de 10µm à ni plus de 250µm.

3. Une feuille magnétique composite selon la Revendication 1 ou 2 où la résine qui est le composant principal contient une résine d'époxy de polymère de type bisphénol A et une résine époxy multifonctionnelle, et où le rapport de poids entre la résine d'époxy de polymère de type bisphénol A et de la résine époxy multifonctionnelle est de 2:1.

4. Une méthode de production d'une feuille magnétique composite comprenant au moins une résine et une poudre magnétique métallique, la méthode comprenant les étapes suivantes :
mélanger la poudre magnétique métallique, la résine et un solvant organique afin d'obtenir une bouillie ; la poudre magnétique métallique contenant des particules plates présentant un axe majeur et un axe mineur, les particules plates ayant un diamètre de l'axe majeur des particules plates situé dans une fourchette allant de ni moins de 5µm et ni plus de 80µm, et présentent un rapport d'aspect défini par un rapport de dimension entre l'axe majeur et l'axe mineur se situant dans une fourchette allant de ni moins de 5 à ni plus de 20 ;
appliquer la bouillie sur un support afin de former une pellicule protectrice ; et
sécher la pellicule protectrice
**caractérisée en ce que**
la résine est obtenue en mélangeant au moins un composant principal qui est une résine époxy ayant un Tg se situant dans la fourchette de 90°C à 120°C avec une résine époxy additionnelle présentant une structure particulière, avec un rapport de poids entre la résine époxy présentant une structure particulière et le composant principal de 0,25 à 1,
où la résine époxy qui est le composant principal est l'une des résines suivantes : une résine contenant une résine d'époxy polymère de type bisphénol A et une résine époxy multifonctionnelle, une résine époxy de type bisphénol AD, une résine époxy de type bisphénol F, une résine époxy de type bisphénol S, une résine époxy de type naphtaline ou une résine époxy de type biphényle, et
où la résine époxy ajoutée présentant une structure particulière est une des résines suivantes : une résine de type biphényle, une résine de type bisphénol S, une résine de type naphtaline, une résine de type cyclopentadiène, une résine de type aralkyle, une résine de type hydroquinone, une résine de type novolaque, une résine de type tétraphényloléthane, une résine de type trishydroxyphénylméthane ou une résine de type phénoledicyclopentadiène.

5. Une méthode de production d'une feuille magnétique composite selon la Revendication 4 où une épaisseur de la feuille magnétique composite après séchage se situe dans une fourchette allant de ni moins de 10µm à ni plus de 250µm.
